# EUROPEAN PATENT SPECIFICATION

(11) **EP 3 281 271 B1**
(45) Date of publication and mention of the grant of the patent: **26.02.2025**
(21) Application number: 16777023.9
(22) Date of filing: 09.03.2016
(51) Int. Cl.: H02J 7/00, H02J 50/00

(54) **MANAGING PRESENCE AND LONG BEACON EXTENSION PULSES**
VERWALTUNG DER PRÄSENZ UND LANGER BAKENERWEITERUNGSIMPULSE
GESTION D'IMPULSION DE PRÉSENCE ET D'IMPULSION LONGUE DE PROLONGEMENT DE BALISE

(30) Priority: 10.04.2015 US 201562146049 P; 29.09.2015 US 201514869655
(43) Date of publication of application: 14.02.2018
(73) Proprietor: Intel Corporation, Santa Clara, CA 95054 (US)
(72) Inventor: KHOSHVENIS, Ahmad Farbod, Portland, OR 97229 (US)
(74) Representative: HGF
(86) International application number: PCT/US2016/021570
(87) International publication number: WO 2016/164133

(56) References cited:
- EP-A1- 2 782 210
- WO-A1-2012/058724
- WO-A1-2014/057343
- WO-A1-2014/131938
- WO-A1-2015/050360
- WO-A2-2010/040015
- WO-A2-2014/020464
- US-A1- 2009 322 280
- US-A1- 2010 007 307
- US-A1- 2010 259 447
- US-A1- 2012 223 589
- US-A1- 2013 154 557
- US-A1- 2013 249 479
- US-A1- 2014 009 120
- US-A1- 2014 217 967
- US-A1- 2014 347 006
- US-A1- 2015 022 018
- US-A1- 2016 221 459

## Description

### TECHNICAL FIELD

This disclosure generally relates to systems and methods for wireless communications and, more particularly, to wireless charging devices.

### BACKGROUND

Wireless devices are becoming widely prevalent and are increasingly requesting wireless access to wireless charging devices. For example, a smartphone may be placed within a predetermined proximity to a wireless charging device, which may wirelessly transmit electrical power to the smartphone to recharge the smartphone's battery. However, wireless charging devices are often inefficient and may waste energy when repeatedly and/or unnecessarily executing processes such as detecting nearby wireless devices (e.g., smartphones), establishing a connection with a nearby device that enables electrical power transfer, transmitting power to a fully charged wireless device and/or a device that is connected to a wired charging device, and/or the like. The following publications relate to the interaction between a wireless charging device and a device to be charged: US 2009/322280 A1, WO 2014/131938 A1, US 2013/249479 A1, WO 2015/050360 A1, WO 2014/057343 A1, WO 2014/020464 A2, WO 2012/058724 A1, US 2014/009120 A1, EP2782210 A1.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items.
FIG. 1 depicts a network diagram illustrating an example network environment of a wireless charging device system, according to one or more example embodiments of the disclosure.
FIG. 2 depicts an illustrative representation of operation of the wireless charging device in a "power save" state, according to one or more example embodiments of the disclosure.
FIG. 3 depicts an illustrative representation of a load power variation, according to one or more example embodiments of the disclosure.
FIG. 4 depicts an example process flow for reducing power consumption of a wireless charging device, according to one or more example embodiments of the disclosure.
FIG. 5 depicts an example of a wireless device, according to one or more example embodiments of the disclosure.
FIG. 6 depicts an example of a radio unit, according to one or more example embodiments of the disclosure.
FIG. 7 depicts an example of a computational environment, according to one or more example embodiments of the disclosure.

### DETAILED DESCRIPTION

The following description and the drawings sufficiently illustrate specific embodiments to enable those skilled in the art to practice them. Other embodiments may incorporate structural, logical, electrical, process, and other changes. Portions and features of some embodiments may be included in, or substituted for, those of other embodiments. The invention is directed to a wireless device and to a method as defined in the claims.

Embodiments described herein are directed to features that may be added to an industry-standard Baseline System Specification (BSS) (e.g., the Alliance for Wireless Power (A4WP Rezence^{™} BSS V1.2, published July 28, 2014) to reduce standby power consumption of, for example, A4WP-certified wireless charging devices. Reducing standby power consumption of wireless charging devices is desirable because particular regulations, such as those instituted by the California Energy Commission, may require standby power consumption of wireless charging devices sold in the marketplace to be lower than a predetermined threshold amount of power.

More particularly, embodiments described herein may provide for disabling one or more functions of a wireless charging device when it is determined that a wireless device being charged by the wireless charging device no longer requires wireless power. For example, when it is determined that a wireless device being charged by the wireless charging device is fully charged, device discovery and/or wireless powering functions of the wireless charging device may be disabled. Alternatively, when it is determined that a wireless device being charged by the wireless charging device is connected to a wired power source, device discovery and/or wireless powering functions of the wireless charging device may be disabled. In this manner, power consumption of wireless charging devices and/or wireless devices may be reduced when the wireless device is fully charged, is connected to a wired power source, or otherwise desires to end its charging but is still within proximity of a charging area or charging volume of the wireless charging devices. The device discovery and/or wireless powering functions may be disables for a predetermined period of time, which predetermined period may be selected by the user and saved as a charging preference. Alternatively, the device discovery and/or wireless powering functions may be disabled until the device charge reaches a predetermined threshold level, such as 80% or 90% of a full charge, at which time the device may be allowed to be wirelessly charged.

The terms "wireless device," "power receiving unit" (PRU), "computing device," "communication station," "handheld device," "mobile device," "user device," and "user equipment" (UE) as used herein may refer to a wireless communication device such as a cellular telephone, a smartphone,a tablet, a netbook, a wireless terminal, a laptop computer, a femtocell, a High Data Rate (HDR) subscriber station, an access point, an access terminal, or other personal communication system (PCS) device. The device may be either mobile or stationary.

The term "wireless charging device" and/or "power transmitting unit" (PTU) as used herein may be a fixed station and/or a wireless station. The term wireless charging device may be a portable yet stationary station coupled to a power source (e.g., a standard 120V wall outlet, a computing device, and/or the like) and may be configured to receive (e.g., communicatively couple with) and/or support a wireless device for wirelessly transferring electrical power from the wireless charging device to the wireless device. In this manner, the wireless charging device may provide electrical power to a battery of the wireless device, thereby powering the battery for later and/or concurrent use of the wireless device.

As used within this document, the term "communicate" may include transmitting, or receiving, or both transmitting and receiving. This may be particularly useful in claims when describing the organization of signals and/or data that is being transmitted by one device and received by another, but only the functionality of one of those devices is required to infringe the claim. Similarly, the bidirectional exchange of data between two devices (both devices transmit and receive during the exchange) may be described as "communicating" when only the functionality of one of those devices is being claimed. The term "communicating" as used herein with respect to a wireless communication signal may include transmitting the wireless communication signal, receiving the wireless communication signal and/or transmitting/receiving wireless power. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

Some embodiments may be used in conjunction with various devices and systems that may include a PRU or PTU, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless device, a wireless charging device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one-way and/or two-way radio communication systems, cellular radio-telephone communication systems, a mobile phone, a cellular telephone, a wireless telephone, a personal communication systems (PCS) device, a PDA device which incorporates a wireless communication device, a mobile or portable global positioning system (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multi-standard radio devices or systems, a wired or wireless handheld device, e.g., a smartphone, a Wireless Application Protocol (WAP) device, or the like.

Some embodiments may be used in conjunction with one or more types of wireless communication signals and/or systems following one or more wireless communication protocols, for example, Orthogonal Frequency-Division Multiple Access (OFDMA), Radio Frequency (RF), Infra-Red (IR), Frequency-Division Multiplexing (FDM), Orthogonal FDM (OFDM), Time-Division Multiplexing (TDM), Time-Division Multiple Access (TDMA), Extended TDMA (E-TDMA), General Packet Radio Service (GPRS), extended GPRS, Code-Division Multiple Access (CDMA), Wideband CDMA (WCDMA), CDMA 2000, single-carrier CDMA, multi-carrier CDMA, Multi-Carrier Modulation (MDM), Discrete Multi-Tone (DMT), Bluetooth^{®}, Bluetooth^{®} low energy (BLE), Global Positioning System (GPS), Wi-Fi, Wi-Max, ZigBeeTM, Ultra-Wideband (UWB), Global System for Mobile communication (GSM), 2G, 2.5G, 3G, 3.5G, 4G, Fifth Generation (5G) mobile networks, 3GPP, Long Term Evolution (LTE), LTE advanced, Enhanced Data rates for GSM Evolution (EDGE), or the like. Other embodiments may be used in various other devices, systems, and/or networks.

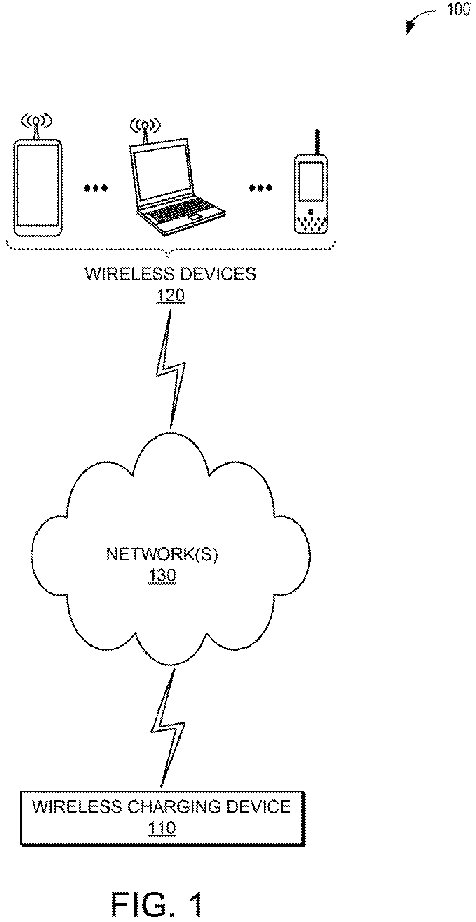

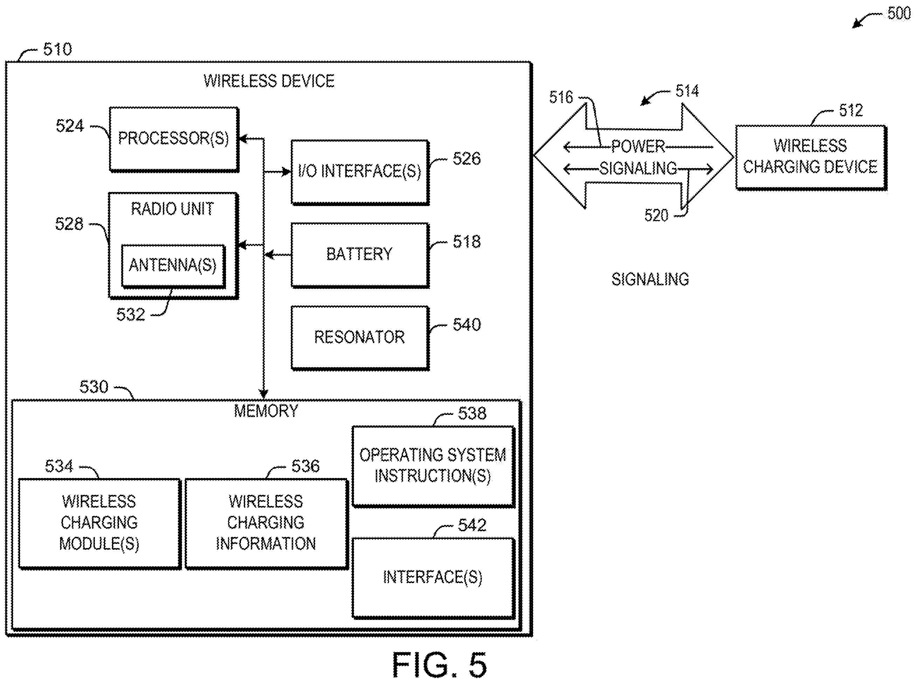

FIG. 1 is a network diagram illustrating an example network environment 100 of a wireless charging device system, according to some example embodiments of the present disclosure. Network environment 100 may include a wireless charging device 110 and a wireless device 120, which may communicate in accordance with IEEE 802.11 communication standards, including IEEE 802.11ax over a network 130, and/or directly in accordance with BLE (e.g., Bluetooth 4.0). In some embodiments, the wireless charging device 110 may be stationary and have a fixed location. As stated above, the wireless device 120 may include one or more devices which may be mobile devices that are non-stationary and do not have fixed locations. In some embodiments, the wireless charging device 110 and the wireless device 120 can include one or more computer systems similar to that of the exemplary functional diagrams of FIGS. 5-7.

The wireless device 120 may be operable by one or more users and may include any suitable processor-driven user device including, but not limited to, a desktop computing device, a laptop computing device, a server, a router, a switch, a smartphone, a tablet, a wearable wireless device (e.g., bracelet, watch, glasses, ring, etc.) and so forth.

The wireless charging device 110 and the wireless device 120 may be configured to communicate with each other via one or more communications networks 130 wirelessly or wired, or directly, such as via BLE. Any of the communications networks 130 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 may include any type of medium over which network traffic may be carried including, but not limited to, coaxial cable, twisted-pair wire, optical fiber, a hybrid fiber coaxial (HFC) medium, Bluetooth, near field communication (NFC), microwave terrestrial transceivers, radio frequency communication mediums, white space communication mediums, ultra-high frequency communication mediums, satellite communication mediums, or any combination thereof.

The wireless charging device 110 and/or the wireless device 120 may include one or more communications antennas. A communications antenna may be any suitable type of antenna corresponding to the communications protocols used by the wireless charging device 110 and/or the wireless device 120. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, Bluetooth^{®} antennas, or the like. The communications antenna may be communicatively coupled to a radio component to transmit and/or receive signals, such as communications signals to and/or from the wireless charging device 110 and/or the wireless device 120.

The wireless charging device 110 and/or the wireless device 120 may include any suitable radio and/or transceiver for transmitting and/or receiving radio frequency (RF) signals in the bandwidth and/or channels corresponding to the communications protocols utilized by any of the wireless charging devices 110 and/or the wireless devices 120 to communicate with each other. The radio components may include hardware and/or software to modulate and/or demodulate communications signals according to preestablished transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g., 802.11b, 802.11g, 802.11n), 5 GHz channels (e.g., 802.11n, 802.11ac), or 60 GHZ channels (e.g., 802.11ad). In some embodiments, non-Wi-Fi protocols may be used for communications between devices, such as Bluetooth, BLE, dedicated short-range communication (DSRC), Ultra-High Frequency (UHF) (e.g., IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and a digital baseband.

In some embodiments, the wireless charging device 110 may include a tray, a bin, and/or a similar designated charging area into/onto which the wireless device 120 is to be placed and/or positioned. In this manner, the wireless charging device 110 is typically configured to receive the wireless device 120 so that the wireless charging device 110 may provide wireless power to the wireless device 120. For example, the wireless device 120 can be positioned in an optimal location for electrical power transfer from the wireless charging device 110 to the wireless device 120 so that a battery of the wireless device 120 may be wirelessly charged by the wireless charging device 110. In some embodiments, the wireless device 120 may be required to be positioned within a predetermined proximity to the wireless charging device 110 and/or a particular portion of the wireless charging device 110 for a transfer of electrical power to be initiated.

In some embodiments, during operation of the wireless charging device 110, a power consumption profile and/or a standby power consumption of the wireless charging device 110 may be calculated over a predetermined period of time (e.g., over a 24-hour period of time). For example, the wireless charging device 110 may be powered on and left operating for an amount of time (e.g., a few hours). The wireless device 120, having a fully depleted battery (e.g., a battery with 0% charge, and/or the like), may then be placed and/or positioned within a designated charging area of the wireless charging device 110 for a remaining amount of time of the predetermined period of time. Next, power transfer from the wireless charging device 110 to the wireless device 120 is initiated so that the battery of the wireless device 120 may be wirelessly charged by the wireless charging device 110. Lastly, an amount of power consumed by the wireless charging device 110 and/or the wireless device 120 is measured over the remaining amount of time. Thus, a total amount of power consumed by the wireless charging device 110 and/or the wireless device 120 may be determined by the wireless charging device 110. As a note, total power consumption of the wireless charging device 110 and/or the wireless device 120 can be measured (e.g., determined, calculated, and/or the like) at various points throughout the charging process.

While the wireless device 120 is located within the designated charging area of the wireless charging device 110, the wireless device 120 may become completely charged (e.g., the battery of the wireless device 120 may reach 100% charge). However, a fully charged wireless device 120 is often left within the designated charge area of the wireless charging device 110 for a remaining portion of the predetermined amount of time, which can result in wasted power consumption. For example, a fully charged wireless device 120 may require no more power, yet the wireless charging device 110 may continue to provide wireless power to the wireless device 120. Further, the wireless charging device 110 may continue to perform various device discovery operations as described herein even though the wireless device 120 is already detected and fully charged.

To reduce power consumption of the wireless charging device 110 after the wireless device 120 battery is determined to be fully charged but still remaining within the designated charging area of the wireless device 110, one or more processes of the wireless charging device 110 and/or the wireless device 120 that are executed for charging the wireless device 120 may be terminated once charging of the wireless device 120 is completed. In particular, the wireless device 120 may turn off and/or disable a presence pulsing process and/or a long beacon extension pulsing process (e.g., device discovery processes described herein) when it is determined that charging of the wireless device 120 is complete and/or the wireless device 120 is connected to a wired power source. The presence pulsing process and/or a long beacon extension pulsing process may be disables for a predetermined period of time, which predetermined period may be selected by the user and saved as a charging preference. Alternatively, the presence pulsing process and/or a long beacon extension pulsing process may be disabled until the device charge reaches a predetermined threshold level, such as 80% or 90% of a full charge, at which time the device may be allowed to be wirelessly charged.

Measurements (not depicted) may confirm that existing wireless charging devices 110 designed based on certain standards, such as the A4WP specification, often have significantly large standby power consumption. Presence pulsing and long beacon extension pulsing are two processes executed by the wireless charging device 110 and/or the wireless device 120 that may dissipate a significant amount of energy, and thereby contribute significantly to standby power consumption. Accordingly, embodiments described herein may significantly reduce standby power consumption by, for example, terminating presence pulsing and/or long beacon extension pulsing after it is determined that they are no longer needed (e.g., determined that the wireless device 120 is fully charged, is connected to a wired power source, or otherwise does not desire to continue receiving a wireless charge).

Presence pulses and long beacon extension pulses are pulses that are typically generated at the wireless device 120 by switching a load (e.g., operating a switch) that draws power between a predetermined power range (e.g., 0.5 to 1.1 watts) during an "on" period (e.g., time duration) of each pulse process. In some embodiments, the purpose of the wireless device 120 generating a presence pulse is for the wireless device 120 to indicate its proximity to a magnetic field generated by the wireless charging device 110. In some embodiments, the wireless charging device 110 is enabled to detect presence pulses and/or long beacon extension pulses transmitted by the wireless device 120.

In some embodiments, an indication of proximity, referred to herein as a presence pulse, includes the wireless device 120 switching a load of the wireless device 120 that draws power by a predetermined power range (e.g., 0.5 to 1.1 watts) from the wireless charging device 110. For example, the wireless device 120 may operate (e.g., open and/or close) a switch in a circuit that causes the wireless device 120 to cycle one or more times between drawing 0.5 watt from the wireless charging device 110 to drawing 1.1 watts from the wireless charging device 110. The switch and/or change of the power drawn from the wireless charging device 110 can be sensed and/or detected by the wireless charging device 110. If a presence pulse is detected by the wireless charging device 110, the wireless charging device 110, in response, can initiate a Bluetooth low energy (BLE) connection between the wireless charging device 110 and the wireless device 120. In some embodiments, where the BLE circuitry of the wireless device 120 is not sufficiently powered by a long beacon received from the wireless charging device 110 to establish a BLE connection, the wireless device 120 may request an extension of the long beacon signal by generating one or more long beacon extension pulses. If long beacon extension pulses (e.g., two presence pulses generated during a long beacon signal) are detected by the wireless charging device 110, then an "on" period (e.g., time duration) of the long beacon may be extended (e.g., from approximately 0.1 second to up to 3 seconds).

Once a BLE connection between the wireless charging device 110 and the wireless device 120 is established, the wireless charging device 110 may transition from a "power save" state to a "power transfer" state in which electrical power is generated and transmitted by the wireless charging device 110 and transferred to the wireless device 120 (e.g., the battery of the wireless device 120). Once it is determined that the wireless device 120 no longer requires wireless power (e.g., when the battery of the wireless device 120 is determined to be fully charged, when the wireless device 120 is determined to be connected to a wired power source, and/or the like), the wireless charging device 110 may transition from a "power transfer" state to a "power save" state by disabling various functions as described herein.

During the "power save" state, the wireless charging device 110 can periodically apply beacons (e.g., pulses of current), also referred to as short beacons, to a resonator included in the wireless charging device 110. These pulses of current applied to the resonator of the wireless charging device 110 typically generate a magnetic field which in turn is received by a resonator of the wireless device 120 and turned into corresponding voltage at the wireless device 120. The corresponding voltage may be received by the wireless device 120, which may initiate circuitry of the wireless device 120 that generates presence pulses and/or long beacon extension pulses. However, if the wireless device 120 does not require power because it is determined that charging of the wireless device 120 is complete and/or that the wireless device 120 is connected to a wired power source (or for any other reason), then in accordance with embodiments disclosed herein the wireless device 120 may not enable and/or disable circuitry in the wireless device 120 that generates presence pulses and/or long beacon extension pulses. This may prevent the expenditure of power by both the wireless device 120 and the wireless charging device 110 in, for example, establishing a BLE connection, transferring to a power transfer state, and reverting back to a power save state once it is determined that the wireless device 120 does not need or desire wireless charging by the wireless charging device 110.

In some embodiments, enabling and/or disabling circuitry of the wireless device 120 may be achieved by implementing a hardware switch. For example, a switch may enable circuitry of the wireless device 120 if the wireless device 120 requires or demands wireless power (e.g., if the battery of the wireless device 120 needs to be charged). Alternatively, a switch may disable circuitry of the wireless device 120 if the wireless device 120 does not require or does not demand wireless power (e.g., if the battery of the wireless device 120 is determined to be fully charged or if the wireless device 120 is determined to be connected to another power source).

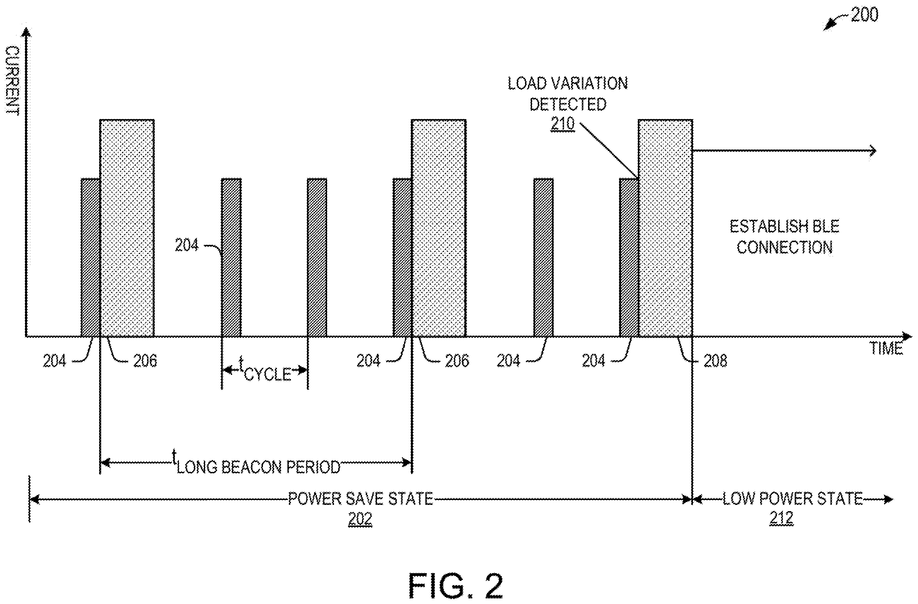

Referring now to the wireless charging device 110 operation diagram 200 of FIG. 2, a "power save" state 202 is illustrated. At "power save" state 202, a wireless charging device, such as the wireless charging device 110 of FIG. 1, may initiate "power save" state operations when it is determined that no devices are within the designated charge area of the wireless charging device. In this state, the wireless charging device may be enabled to determine whether a wireless device, such as wireless device 120 of FIG. 1, is within a predetermined proximity to the wireless charging device.

To determine whether the wireless device is within a predetermined proximity to the wireless charging device during a "power save" state, the wireless charging device may broadcast and/or transmit pulses of current. In some embodiments, a waveform of these current pulses may be applied to a resonator of the wireless charging device to produce short beacons 204. A short beacon 204 may include a sinusoidal waveform with, for example, a 6.78 MHz fundamental frequency with a root mean squared (RMS) value equal to and/or larger than a predetermined minimum wireless charging device design parameter. In some embodiments, the duration of the short beacon 204 is typically less than 30ms, but may vary. In some embodiments, short beacons 204 are periodic with a period of 250ms, denoted as t_{Cycle} in FIG. 2.

Additionally and/or alternatively, other waveforms of these current pulses may produce periodic long beacons 206. The long beacons 206 may be produced by the wireless charging device in a "power save" state 202 operation. For example, a periodic long beacon 206 may include a sinusoidal waveform with a 6.78 MHz fundamental frequency and an RMS value equal to and/or larger than a predetermined minimum design parameter. In some embodiments, the duration of the long beacon 206 is 105ms +/- 5ms, while the period of the long beacon 206 may be between 850ms to 3000ms, denoted as t_{Long_beacon_Period}. Aperiodic long beacons 208 may also be produced by the wireless charging device during "power save" state 202 operation. In some embodiments, aperiodic long beacons 208 have a similar and/or the same wave form as periodic long beacons 206, but are typically generated immediately after the generation of a short beacon 204 by which a wireless device is detected, such as by a load variance 210 (e.g., a presence pulse).

A purpose of the wireless charging device for generating short beacons 204 may be to initiate detection of the presence of the wireless device 120 through sensing changes in impedance (e.g., a change in load variation detection and/or load detection). For example, a design of the wireless charging device may be such that a power amplifier of the wireless charging device serves as a constant current source. Any changes in impedance may be sensed and/or detected by changes in voltage measured at two ends of the resonator of the wireless charging device. Alternatively, an accurate measurement can be implemented by measuring both voltage and current at each end of the resonator of the wireless charging device, detecting changes in total power, and/or detecting changes in phase between voltage and current of the resonator of the wireless charging device.

The change in impedance at one end may correspond to changes in power at the wireless device, as described herein. The change in impedance may be based on an amount of metal included in the wireless device that enables the wireless charging device to detect changes in electrical disturbances (e.g., detect the wireless device). In some embodiments, particular smaller wireless devices (e.g., wearable devices) and/or higher power wireless devices with small quantities of metal may not create a detectable change in impedance at the wireless charging device. Therefore, in order to enable detection of these particular wireless devices and to establish a quick connection between the wireless charging device and the wireless device, and in response to receiving and/or detecting a short beacon transmitted by the wireless charging device, the wireless device(s) may generate a detectable load change (e.g., a presence pulse) as described herein.

A presence pulse may be generated at the wireless device during and/or in response to a short beacon 204 of the wireless charging device by switching between two load levels such that power drawn by the wireless device between two loads varies by at least a predetermined amount.

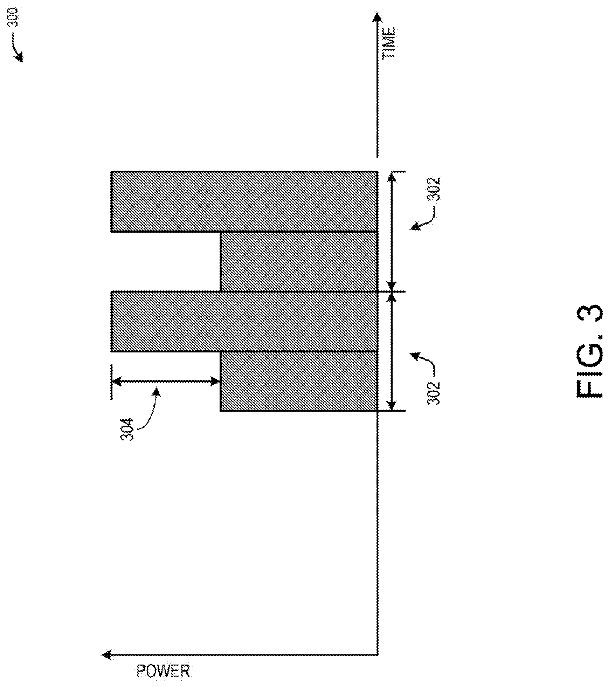

With reference to FIG. 3, illustrated is an example presence pulse 302 (or sequence of presence pulses) that may be generated by a wireless device, such as wireless device 120 of FIG. 1, during and/or in response to a short beacon 204 of the wireless charging device, as illustrated in FIG. 3. The presence pulse 302is intended to create a load variance at the wireless charging device, such as the wireless charging device 110 in FIG. 1, that is detectable as being associated with a wireless device. For example, the wireless device may generate a load variance 304, for example, of 0.5 watt, but preferably between 0.5-1.1 watts. This variation in power drawn by the wireless device may be detected by the wireless charging device because the variation in power typically results in power variation at the wireless charging device by at least the same amount (e.g. 0.5 watt, assuming 100% efficiency). As such, when a presence pulse 302 is detected by the wireless charging device, it can be treated as a valid impedance change, and is indicative of a wireless device in proximity of the wireless charging device. Additionally and/or alternatively, the wireless device may generate and/or transmit an alert, an acknowledgement, a notification, and/or the like to the wireless charging device to indicate that the short beacon 204 was received by the wireless device and that the wireless device is within a predetermined proximity of the wireless charging device.

With reference back to FIG. 2, a load variation 210 may be detected by the wireless charging device based on a short beacon load variance or a presence pulse load variance, thereby indicating that the wireless device is within a predetermined proximity to the wireless charging device. The wireless charging device may then attempt to connect to the wireless device by generating an aperiodic long beacon 208 in response to the impedance change or when the presence pulse is detected. In some embodiments, a function of the wireless charging device generating the long beacons 206 and the aperiodic long beacon 208 is to provide enough power to the wireless device for formation of a BLE, and other required circuitry of the wireless device is powered sufficiently to send a BLE advertisement, though as noted hereinbefore, the aperiodic long beacon 208 is generated after a short beacon 204 during which the wireless device is detected, as illustrated in FIG. 2.

The aperiodic long beacon 208 may be utilized to provide power to the wireless device for establishing a BLE connection with the wireless charging device because the aperiodic long beacon 208 typically provides sufficient power for a longer duration of time when compared to a short beacon 204. As mentioned above, an exemplary duration of long beacons 206, 208 may be 105ms +/- 5ms. However, in some embodiments, this duration of the long beacons 206, 208 might not be sufficient enough for some wireless devices to initiate formation of a BLE connection; that is, for powering appropriate firmware, drivers, and/or supporting circuitries to generate and/or transmit a BLE advertisement. As such, the wireless device may require a longer period of time of provided power. Accordingly, in some embodiments, the wireless device may determine that additional time (e.g., more time than provided by a received long beacon 206, 208) is required for establishing a BLE connection with the wireless charging device.

In response to receiving a long beacon 206, 208 and/or in response to determining that additional time (e.g., more time than provided by a received long beacon 206, 208) is required for establishing a BLE connection with the wireless charging device, the wireless device may generate and/or transmit to the wireless charging device a request for an extension of the long beacon. In some embodiments, the request for extension may request that a long beacon of an extended predetermined amount of time (e.g., an additional 2900ms) be sent. Extension of a long beacon may be requested at the wireless device by generating two presence pulses during a long beacon 206, 208. For example, the wireless device may switch between two loads such that power drawn between two loads is at least a predetermined amount and/or within a predetermined power range (e.g., at least 0.5 watt and at most 1.1 watts). When such a load variation is detected at least twice at the wireless charging device during a long beacon 206, 208, the wireless charging device may extend the long beacon by an additional amount of time (e.g., 2900ms +/- 100ms). In this manner, long beacon extensions may be used when the battery of the wireless device is completely depleted (e.g., 0% charge). In some implementations, long beacon extension might be required for operation of the wireless device regardless of the charge status of its battery.

The wireless charging device may receive the request for an extension of the long beacon 208; for example, the detection of two load variations in voltage and/or impedance caused by the two presence pulses (e.g., presence pulses 302 in FIG. 3). Further, the wireless charging device may generate and/or transmit an extended long beacon (not shown) to the wireless device. The extended long beacon typically has a sufficient duration that enables the wireless device to establish a BLE connection with the wireless charging device.

With reference back to FIG. 2, the aperiodic long beacon 208 may be received by the wireless device. Further, a BLE connection may be established between the wireless charging device and the wireless device. Typically, the BLE connection (e.g., a 2 Gz frequency band) is utilized by the wireless charging device and/or the wireless device to communicate various pieces of control information such as safety information, voltage information, current information, state information, charge status information, and/or the like, while wireless power may be transmitted from the wireless charging device to the wireless device over existing networks (e.g., a 6.78 MHz frequency band), such as the network 130 of Fig. 1. In some embodiments, establishment of the BLE connection transitions the wireless charging device into a "low power" state 212.

With a BLE connection established, the wireless charging device may begin to deliver a wireless charge to a battery of the wireless device. The wireless charging device may continuously monitor and/or determine a charge status (e.g., a battery charge level) of the battery of the wireless device. Typically, the wireless charging device charges the battery of the wireless device until the charge of the battery is full (e.g., 100%).

When wireless power is not required by the wireless device, the wireless device may utilize one of two mechanisms to notify the wireless charging device. First, the wireless device may send a "charge complete" signal (e.g., an alert, a message, a pulse, and/or the like) to the wireless charging device to indicate that wireless power is no longer required by the wireless device. In some embodiments, triggering generation and/or transmission of a "charge complete" signal at the wireless device may not necessarily be (although may be) dependent on an actual charge status of the wireless device. That is, a "charge complete" signal may be sent by the wireless device at any time regardless of the charge status (e.g., when its battery has x% charge, for any x<= 100). Second, the wireless device may transmit a "wired charger connected" signal to the wireless charging device to indicate that a wired charger is connected to the wireless device and that wireless power is no longer required by the wireless device. Additionally and/or alternatively, the wireless charging device may determine that the battery of the wireless device is fully charged (e.g., 100%), and therefore power is no longer required by the wireless device.

In some embodiments, the "charge complete" signal may include a bit frame (e.g., a plurality of bits) included in a header of a data packet. One or more bits in the bit frame may correspond to whether or not the charge of the battery of the wireless device is complete (e.g., 100%), whether wireless power is required by the wireless device, and/or the like. In some embodiments, a bit set to "1" may indicate that wireless power is no longer required (e.g., that a charge is full), whereas a bit set to "0" may indicate that wireless power is required (e.g., that a charge is not full). In this manner, the wireless charging device may receive the bit frame from the wireless device and decode or monitor the bit frame to identify and/or determine whether wireless power is required by the wireless device.

When the wireless charging device receives a "charge complete" signal from the wireless device receiving power and/or determines that the wireless device no longer requires wireless power, the wireless charging device may transition back to a "power save" state and initiate beaconing processes. Accordingly, one or more functions of the wireless charging device, such as device discovery operations and/or wireless power providing operations, may be disabled and/or terminated. At this time, the wireless charging device may be operating in a standby mode. However, any wireless device remaining in the designated charging area of the wireless charging device may be detected by a short beacon, or may continue to generate a presence pulse and/or a long beacon extension request signal in response to a short beacon or a long beacon.

In some embodiments, when the wireless device does not require power (e.g., when a "charge complete" bit in a "charge complete" alert or dynamic characteristics transmitted from the wireless device to the wireless charging device is set to 1), the wireless device may disable functions associated with generating and/or transmitting presence pulses and/or requests for long beacon extension pulses. This may be implemented in software and/or firmware by disabling a method or the circuitry that controls generation of a presence pulse or long beacon extension request signal. However, in some embodiments, the circuitry of the wireless device may not be completely functional during a short beacon or a long beacon pulse. In that case, a switch may be utilized for disabling the circuitry responsible for generating the presence pulses and the long beacon extension request signals.

For example, the generation of a presence pulse or a long beacon extension request pulse may be disabled by disabling functionality in the hardware and/or circuitry of the wireless charging device and/or the wireless device . In some embodiments, a pin in an integrated circuit of the wireless charging device and/or the wireless device can be allocated for enabling and/or disabling a presence pulse or a long beacon extension request signal. This pin may be triggered by a hardware indication of a "charge complete" and/or "wired charger detected" signal, a determination that the wireless device no longer requires wireless power, and/or the like. For example, a comparator may compare a measured voltage of a battery of the wireless device and an expected voltage of a 100% charged battery of the wireless device. If the measured battery voltage is greater than or equal to the expected voltage of a 100% charged battery (and/or a predetermined voltage), the wireless device can generate a signal to trigger "charge complete" processes. This signal may also trigger an enable/disable pin in an integrated circuit that generates a presence pulse and/or a long beacon extension request pulse by the wireless device. Therefore, in a case of implementing a signal generator for a presence pulse and/or a long beacon extension request pulse on a circuit of the wireless device, a corresponding circuit portion may be switched off and/or be isolated from the rest of the circuit when the wireless device does not require wireless power.

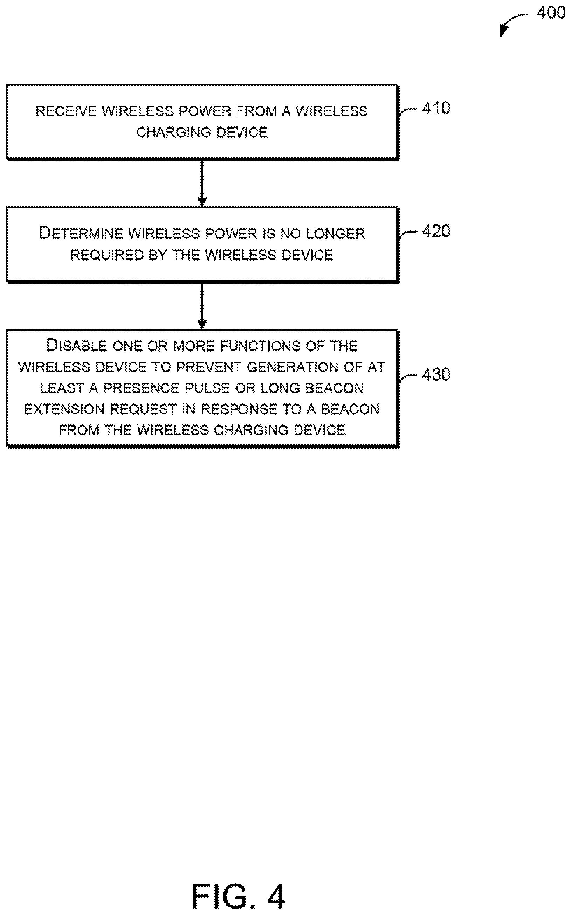

FIG. 4 illustrates an exemplary process flow 400 for reducing power consumption of a wireless charging system comprising a wireless charging device and a wireless device, such as wireless charging device 110 and wireless device 120, respectively, in FIG. 1. At block 410, the process includes receiving wireless power by a wireless device from a wireless charging device. At block 420, the process includes determining that wireless power is no longer required by the wireless device. At block 430, the process includes disabling one or more functions of the wireless device prevent generation of at least a presence pulse or a long beacon extension request in response to a beacon from the wireless charging device.

FIG. 5 illustrates an example of a communication environment 500 for wireless charging techniques in accordance with one or more aspects of the disclosure. The example communication environment 500 is only illustrative and is not intended to suggest or otherwise convey any limitation as to the scope of use or functionality of such computational environment's architecture. In addition, the communication environment 500 should not be interpreted as having any dependency or requirement relating to any one or combination of components illustrated in this example computational environment. The illustrative communication environment 500 can embody or can include, for example, the wireless charging device 110, the wireless device 120, and/or any other computing device that can implement or otherwise leverage the wireless charging features described herein.

The communication environment 500 includes a wireless device 510 and a wireless charging device 512, each of which may incorporate charging protocol(s) 514 established by Alliance for Wireless Power (A4WP) for exchanging signals. In an embodiment, the wireless charging device 512 may provide wireless power 516, such as resonant magnetic inductive energy, to the wireless device 510 for charging a battery 518 of the wireless device 510. In addition to wireless power 516, the wireless device 510 and the wireless charging device 512 may exchange information signals 520 (e.g., encoded, modulated, and/or arranged) in accordance with the charging protocol utilized, such as may be provided by A4WP.

The wireless devices 510 may be any variety of client devices, electronic devices, communications devices, and/or other user devices. The wireless devices 510 may include, but are not limited to, tablet computing devices, electronic book (ebook) readers, netbook computers, Ultrabook^{™}, notebook computers, laptop computers, desktop computers, watches or other wearables, health monitors, personal digital assistants (PDA), smartphones, web-enabled televisions, video game consoles, set top boxes (STBs), or the like. While the drawings and/or specification may portray the wireless device 510 in the likeness of a smartphone, a tablet, or a laptop computer, the disclosure is not limited to such. Indeed, the systems and methods described herein may apply to any mobile device or user device capable of communicating with and/or receiving power from the wireless charging device 512. The mobile devices may be used by users for a variety of purposes including, but not limited to, functionality such as web browsing, business functions, communications, graphics, word processing, publishing, spreadsheets, databases, gaming, education, entertainment, media, project planning, engineering, drawing, or combinations thereof.

In the illustrated embodiment, the wireless device 510 includes one or more processor(s) 524, an input/output (I/O) interface 526, a radio unit 528, and a battery 518. Each component 518, 524, 526 and 528 may be communicatively coupled to a memory 530. The wireless device 510 further includes an antenna 532 in communication with a radio unit 528. The memory 530 includes a wireless charging module 534, wireless charging information 536, and an operating system (e.g., OS instructions) 538. The wireless charging module 534 may be a mobile application stored on the memory 530 and may be configured to retrieve or determine wireless device information associated with the wireless device 510, as well as determine charge request communications (e.g., presence pulses and/or long beacon extension requests) to be transmitted by the wireless device 510 to the wireless charging device 512, for example. This may include the determination not to generate and/or send a presence pulse or long beacon extension request when the wireless device 510 determines that wireless power is not required by and/or desired by the wireless device 510. In embodiments, this may include not generating and/or not sending the presence pulse or long beacon extension request in response to a short beacon or long beacon received from the wireless charging device 512.

The wireless charging information 536 may be configured to store electronic communications and operating parameters of the wireless device 510 utilized by the wireless charging module 534. The operating system 538 may provide users with a guided user interface and/or may provide software logic used to control the wireless device 510. The wireless device 510 may also include a resonator 540 configured to receive resonant magnetic inductive energy wirelessly from the wireless charging device 512, and may be further configured to charge the battery 518 of the wireless device 510, as described herein. Although each of these components is shown in the illustrated embodiment, other embodiments of wireless device 510 and the wireless charging device 512 may include components necessary to receive and store other forms of wirelessly communicated energy, such as capacitive charging.

The processor 524 of the wireless device 510 may be implemented as appropriate in hardware, software, firmware, or combinations thereof. Software or firmware implementations of the processor 524 may include computer-executable or machine-executable instructions written in any suitable programming language to perform the various functions described. Hardware implementations of the processor 524 may be configured to execute computer-executable or machine-executable instructions to perform the various functions described. The processor 524 may include, without limitation, a central processing unit (CPU), a digital signal processor (DSP), a reduced instruction set computer (RISC), a complex instruction set computer (CISC), a microprocessor, a microcontroller, a field programmable gate array (FPGA), or any combination thereof. The processor 524 may also include one or more application-specific integrated circuits (ASICs) or application-specific standard products (ASSPs) for handling specific data processing functions or tasks. In certain example embodiments, the wireless device 510 and the wireless charging device 512 may be based on an Intel^{®} Architecture system, and the processor 524 and any other chipset associated with the wireless device 510 may be from a family of Intel^{®} processors and chipsets, such as the Intel^{®} Atom^{®} processor family.

The input/output (I/O) interfaces 526 may enable the use of one or more user interfaces for receiving user input and/or providing output to the user. A user may be able to administer or manage the systems and methods disclosed herein by interacting with the wireless device 510 via the input/output interfaces 526, such as a touchscreen interface, a display, a guided user interface, or any other input/output interface. The input/output interfaces 526 may be in the form of a touch screen, a microphone, an accelerometer sensor, a speaker, or any other suitable input/output interfaces 526 that may be used by the user to interact with the wireless device 510.

The memory 530 of the wireless device 510 may include one or more volatile and/or non-volatile memory devices including, but not limited to, magnetic storage devices, read only memory (ROM), random access memory (RAM), dynamic RAM (DRAM), static RAM (SRAM), synchronous dynamic RAM (SDRAM), double data rate (DDR) SDRAM (DDR-SDRAM), RAM-BUS DRAM (RDRAM), flash memory devices, electrically erasable programmable read only memory (EEPROM), non-volatile RAM (NVRAM), universal serial bus (USB) removable memory, or combinations thereof.

The memory 530 may store program instructions that are loadable and executable on the processor 524, as well as data generated or received during the execution of these programs. Turning to the contents of the memory 530 in more detail, the memory 530 may include several modules. Each of the modules and/or software may provide functionality for the wireless device 510, when executed by the processor 524. The modules and/or the software may or may not correspond to physical locations and/or addresses in the memory 530. In other words, the contents of each of the modules may not be segregated from each other and may, in fact, be stored in at least partially interleaved positions in the memory 530.

The memory 530 may include the operating system 538. The processor 524 may be configured to access and execute one or more operating systems stored in the respective operating system 538 to operate the system functions of the wireless device. System functions, as managed by the operating system, may include memory management, processor resource management, driver management, application software management, system configuration, and the like. The operating system may be any variety of suitable operating systems including, but not limited to, Google^{®} Android^{®}, Microsoft^{®} Windows^{®}, Microsoft^{®} Windows^{®} Server^{®}, Linux, Apple^{®} OS-X^{®}, or the like.

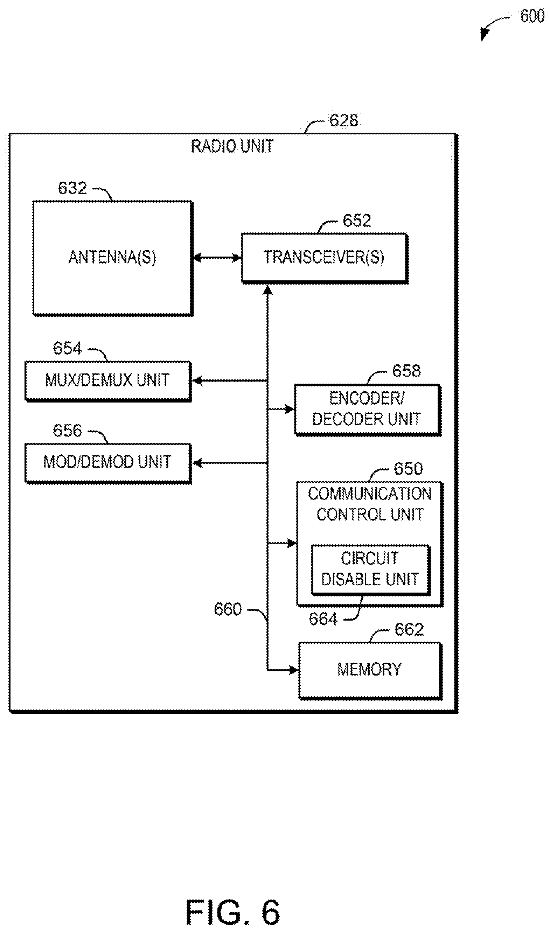

The radio unit 528 of the wireless device 510, as described in more detail with reference to FIG. 6, may be a transmit/receive component, such as a transceiver. The radio unit 528 may include any suitable radio(s) and/or transceiver(s) for transmitting and/or receiving radio frequency (RF) signals in the bandwidth and/or channels corresponding to the communications protocols utilized by the wireless device 510 with other user devices and/or the wireless charging device 512. The radio unit 528 may include hardware and/or software to modulate communications signals according to preestablished distribution protocols. The radio unit 528 may further have hardware and/or software instructions to communicate via one or more Wi-Fi and/or Wi-Fi direct protocols, as standardized by the Institute of Electrical and Electronics Engineers (IEEE) 802.11 standards. In certain embodiments, the radio unit 528, in cooperation with the antennas 532, may be configured to communicate via 2.4 GHz channels (e.g. 802.11b, 802.11g, 802.11n), 5 GHz channels (e.g. 802.11n, 802.11ac), or 60 GHZ channels (e.g. 802.11ad). In alternative embodiments, non-Wi-Fi protocols may be used for communications between the wireless device 510 and/or the wireless charging device 512, such as BLUETOOTH^{™}, BLUETOOTH(TM) LE, Near Field Communication, dedicated short-range communication (DSRC), or other packetized radio communications. The radio unit 528 may include any known receiver and baseband suitable for communicating via the communications protocols of the wireless charging device 512. The radio unit 528 may further include a low noise amplifier (LNA), additional signal amplifiers, an analog-to-digital (A/D) converter, one or more buffers, and a digital baseband.

The antenna(s) 532 included in the radio unit 528 of the wireless device 510 may be configured for receiving and/or transmitting communications signals from/to the wireless charging device 512, directly or indirectly. The antenna(s) 532 may be any suitable type of antenna corresponding to the communications protocols used by the wireless device 510 for the particular signals received and/or transmitted via the antenna(s) 532. Some non-limiting examples of suitable antenna(s) 532 include directional antennas, non-directional antennas, dipole antennas, folded dipole antennas, patch antennas, multiple-input multiple-output (MIMO) antennas, or the like. Each antenna 532 may be communicatively coupled to a radio component to transmit and/or receive signals, such as communications signals to and/or from the wireless charging device 512.

The antenna(s) 532 may be configured to receive and/or transmit signals in accordance with established standards and protocols, such as Institute of the Electrical and Electronics Engineers (IEEE) 802.11 family of standards, including via 2.4 GHz channels (e.g. 802.11b, 802.11g, 802.11n), 5 GHz channels (e.g. 802.11n, 802.11ac), or 60 GHZ channels (e.g. 802.11ad). In alternative example embodiments, the antenna(s) 532 may be configured to receive and/or transmit non-Wi-Fi protocol signals, such as BLUETOOTH^{™}, BLUETOOTH^{™} LE, Near Field Communication, dedicated short-range communication (DSRC), or other packetized radio communications.

The wireless device 510 may include an energy storage device, such as the battery 518. The battery 518 may be configured to provide energy or otherwise power the wireless device 512. The battery 518 may be any suitable type of battery including, but not limited to, wet cells, dry cells, lead-acid, lithium, lithium hydride, lithium ion, or the like, at any suitable voltage and/or output current. In certain embodiments, the battery 518 may be rechargeable and may be recharged by one or more other power sources, such as the wireless charging device 512. The battery 518 may be configured to receive and store energy.

The wireless device 510 may include a resonator 540. The resonator 540 may be any suitable resonator configured to provide, distribute, transmit, or receive energy. For example, the resonator 540 may be configured to transmit, emit, or otherwise transfer energy wirelessly, and the resonator 540 may be configured to receive the energy transmitted by a resonator of the wireless charging device 512. The resonator 540 may be electromagnetic resonators in one example. Other wireless charging technologies, including infrared (IR), capacitive, or other technologies may be incorporated into the wireless device 510 and/or the wireless charging device 512.

With continued reference to FIG. 5, the wireless charging module 534 of the memory 530 may comprise computer-accessible instructions that, in response to execution (by at least one of the processor(s) 524), can implement one or more of the functionalities of the disclosure. The computer-accessible instructions can embody or can comprise one or more software components illustrated as wireless device 510. In one scenario, execution of at least one component of the wireless device 510 can implement one or more of the techniques disclosed herein. For instance, such execution can cause a processor that executes the at least one component to carry out a disclosed example method. It should be appreciated that, in one aspect, a processor of the processor(s) 524 that executes at least one of the wireless device 510 component(s) can retrieve information from or retain information in wireless charging information 536 in order to operate in accordance with the functionality programmed or otherwise configured by the wireless device 510. Such information can include at least one of code instructions, information structures, or the like. At least one of the one or more interfaces 542 (e.g., application programming interface(s)) can permit or facilitate communication of information between two or more components within the wireless charging module 534. The information that is communicated by the at least one interface can result from implementation of one or more operations in methods of the disclosure. **In** certain embodiments, one or more of the wireless charging modules 534 and the wireless charging information 536 can be embodied in or can comprise removable/non-removable, and/or volatile/non-volatile computer storage media.

At least a portion of at least one of the wireless charging modules 534 may program or otherwise configure one or more of the processors 524 to operate at least in accordance with the functionality described herein. One or more of the processor(s) 524 can execute at least one of such components and leverage at least a portion of the information in the wireless charging information 536 in order to provide wireless charging techniques in accordance with one or more aspects described herein. More specifically, yet not exclusively, execution of the wireless charging module 534 may permit transmitting and/or receiving information at the wireless charging device 512, where the at least a portion of the information includes wireless power, various pulses, and/or the like as described in connection with FIGS. 1-4, for example.

It should be appreciated that, in certain scenarios, the memory 530 can embody or can comprise a computer-readable non-transitory storage medium having computer-accessible instructions that, in response to execution, cause at least one processor (e.g., one or more of processor(s) 524) to perform a group of operations comprising the operations or blocks described in connection with the disclosed methods.

It should be recognized that while the wireless charging module 534 and other components of the memory 530, such as the operating system 538, are illustrated herein as discrete blocks. Such software components can reside at various times in different memory components of the wireless device 510, and can be executed by at least one of the processor(s) 524. In certain scenarios, an implementation of the wireless charging module 534 and/or the wireless charging information 536 may be retained on or transmitted across some form of computer-readable media.

FIG. 6 illustrates a block diagram of an example embodiment 600 of an example radio unit 628, which may include one or more antennas 532 and a communication control unit 650. In certain embodiments, the antenna(s) 632 can be embodied in or can include directional or omnidirectional antennas including, for example, dipole antennas, monopole antennas, patch antennas, loop antennas, microstrip antennas or other types of antennas suitable for transmission of RF signals. In addition, or in other embodiments, at least some of the antenna(s) 632 can be physically separated to leverage spatial diversity and related different channel characteristics associated with such diversity. In addition or in other embodiments, the communication control unit 650 can process at least wireless signals in accordance with one or more radio technology protocols and/or modes (such as MIMO, MU-MIMO (e.g., multiple user-MIMO), single-input-multiple-output (SIMO), multiple-input-single-output (MISO), and the like. Each of such protocol(s) can be configured to communicate (e.g., transmit, receive, or exchange) data, metadata, and/or signaling over a specific air interface. The one or more radio technology protocols can include 3GPP UMTS; LTE; LTE-A; Wi-Fi protocols, such as those of the Institute of Electrical and Electronics Engineers (IEEE) 802.11 family of standards; Worldwide Interoperability for Microwave Access (WiMAX); radio technologies and related protocols for ad hoc networks, such as Bluetooth, Bluetooth Low Energy, or ZigBee; other protocols for packetized wireless communication; or the like). The communication control unit 650 also can process non-wireless signals (analogic, digital, a combination thereof, or the like). In one embodiment, the radio unit 628 may comprise a set of one or more transmitters/receivers (e.g., transceivers) 652, and components therein (amplifiers, filters, analog-to-digital (A/D) converters, etc.), functionally coupled to a multiplexer/demultiplexer (mux/demux) unit 654, a modulator/demodulator (mod/demod) unit 656 (also referred to as modem 656), and an encoder/decoder unit 658 (also referred to as codec 658). Each of the transmitter(s)/receiver(s) can form respective transceiver(s) that can transmit and receive wireless signals (e.g., streams, electromagnetic radiation) via the one or more antennas 632. It should be appreciated that in other embodiments, the communication control unit 650 can include other functional elements, such as one or more sensors, a sensor hub, an offload engine or unit, a combination thereof, or the like.

In an embodiment, the communication control unit 650 (or another component of the radio unit 628 or the wireless device (e.g., wireless device 510 of FIG. 5) may include a circuit disable unit 664. The circuit disable unit 664 may be implemented in hardware, firmware or software to disable the device discovery and/or wireless powering functions, such as presence pulsing process and/or a long beacon extension pulsing process, for a predetermined period of time, which predetermined period may be selected by the user and saved as a charging preference. Alternatively, the device discovery and/or wireless powering functions may be disabled until the device charge reaches a predetermined threshold level, such as 80% or 90% of a full charge, at which time the device may be allowed to be wirelessly charged. The circuit disable unit 664 may enable/disable, for example, a pin in an integrated circuit of the wireless device or actuate a switch that enables/diables the communication control unit 650 (or another component or circuit of the radio unit 628 or wireless device 510) from, for example, responding to discovery request from a wireless charging device and/or otherwise performing wireless charging functions.

Electronic components and associated circuitry, such as mux/demux unit 654, codec 658, and modem 656 can permit or facilitate processing and manipulation, e.g., coding/decoding, deciphering, and/or modulation/demodulation, of signal(s) received by the wireless device 510 and signal(s) to be transmitted by the wireless device 510. In one aspect, as described herein, received and transmitted wireless signals can be modulated and/or coded, or otherwise processed, in accordance with one or more radio technology protocols. Such radio technology protocol(s) can include 3GPP UMTS; 3GPP LTE; LTE-A; Wi-Fi protocols, such as the IEEE 802.11 family of standards (IEEE 802.ac, IEEE 802.ax, and the like); WiMAX; radio technologies and related protocols for ad hoc networks, such as Bluetooth or ZigBee; other protocols for packetized wireless communication; or the like.

The electronic components in the described radio unit, including the one or more transceivers 652, can exchange information (e.g., data packets, allocation information, data, metadata, code instructions, signaling and related payload data, combinations thereof, or the like) through a bus 660, which can embody or can comprise at least one of a system bus, an address bus, a data bus, a message bus, a reference link or interface, a combination thereof, or the like. Each of the one or more transceivers 652 can convert signals from analog to digital and vice versa. In addition or in the alternative, the transceivers 652 can divide a single data stream into multiple parallel data streams, or perform the reciprocal operation. Such operations may be conducted as part of various multiplexing schemes. As illustrated, the mux/demux unit 654 is functionally coupled to the one or more transceivers 652 and can permit processing of signals in time and frequency domain. In one aspect, the mux/demux unit 654 can multiplex and demultiplex information (e.g., data, metadata, and/or signaling) according to various multiplexing schemes such as time division multiplexing (TDM), frequency division multiplexing (FDM), orthogonal frequency division multiplexing (OFDM), code division multiplexing (CDM), or space division multiplexing (SDM). In addition or in the alternative, in another aspect, the mux/demux unit 654 can scramble and spread information (e.g., codes) according to most any code, such as Hadamard-Walsh codes, Baker codes, Kasami codes, polyphase codes, and the like. The modem 656 can modulate and demodulate information (e.g., data, metadata, signaling, or a combination thereof) according to various modulation techniques, such as OFDMA, OCDA, ECDA, frequency modulation (e.g., frequency-shift keying), amplitude modulation (e.g., M-ary quadrature amplitude modulation (QAM), with M a positive integer; amplitude-shift keying (ASK)), phase-shift keying (PSK), and the like). In addition, processor(s) that can be included in the wireless device 510 (e.g., processor(s) included in the radio unit 528 or other functional element(s) of the wireless device 510) can permit processing data (e.g., symbols, bits, or chips) for multiplexing/demultiplexing, modulation/demodulation (such as implementing direct and inverse fast Fourier transforms), selection of modulation rates, selection of data packet formats, inter-packet times, and the like.

The encoder/decoder unit ("codec") 658 can operate on information (e.g., data, metadata, signaling, or a combination thereof) in accordance with one or more coding/decoding schemes suitable for communication, at least in part, through the one or more transceivers formed from respective transceiver(s) 652. In one aspect, such coding/decoding schemes, or related procedure(s), can be retained as a group of one or more computer-accessible instructions (computer-readable instructions, computer-executable instructions, or a combination thereof) in one or more memory devices 662 (referred to as memory 662). In a scenario in which wireless communication among the wireless device 510 and another computing device (e.g., an access point, a user device, a station, and/or other types of user equipment) utilizes MU-MIMI, MIMO, MISO, SIMO, or SISO operation, the codec 658 can implement at least one of space-time block coding (STBC) and associated decoding, or space-frequency block (SFBC) coding and associated decoding. In addition or in the alternative, the codec 658 can extract information from data streams coded in accordance with spatial multiplexing scheme. In one aspect, to decode received information (e.g., data, metadata, signaling, or a combination thereof), the codec 658 can implement at least one of computation of log-likelihood ratios (LLRs) associated with constellation realization for a specific demodulation; maximal ratio combining (MRC) filtering, maximum-likelihood (ML) detection, successive interference cancellation (SIC) detection, zero forcing (ZF) and minimum mean square error estimation (MMSE) detection, or the like. The codec 658 can utilize, at least in part, the mux/demux unit 654 and the mod/demod unit 656 to operate in accordance with the aspects described herein.

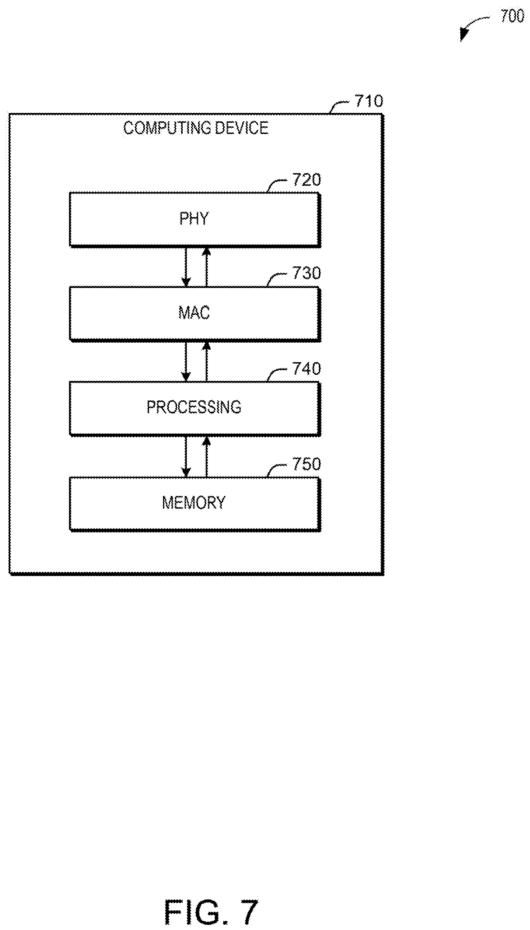

FIG. 7 presents another example embodiment 700 of a computing device 710 in accordance with one or more embodiments of the disclosure. In certain implementations, the computing device 710 can be a wireless device, similar to the wireless devices 120, 510 of FIGS. 1 and 5, respectively, that is HEW-compliant and may be configured to communicate with one or more other HEW devices and/or other types of communication devices, such as wireless charging devices 110, 512 of FIGS. 1 and 5, respectively. HEW devices may be referred to as HEW stations (STAs) and legacy STAs, respectively. In one implementation, the computing device 710 can operate as an access point, a user device, and/or another device. As illustrated, the computing device 710 can include, among other things, physical layer (PHY) circuitry 720 and medium-access-control layer (MAC) circuitry 730. In one aspect, the PHY circuitry 710 and the MAC circuitry 730 can be HEW compliant layers and also can be compliant with one or more legacy IEEE 802.11 standards. In one aspect, the MAC circuitry 730 can be arranged to configure physical layer converge protocol (PLCP) protocol data units (PPDUs) and arranged to transmit and receive PPDUs, among other things. In addition or in other embodiments, the computing device 710 also can include other hardware processing circuitry 740 (e.g., one or more processors) and one or more memory devices 750 configured to perform the various operations described herein.

In certain embodiments, the MAC circuitry 730 can be arranged to contend for a wireless medium during a contention period to receive control of the medium for the HEW control period and configure an HEW PPDU. In addition or in other embodiments, the PHY circuitry 720 can be arranged to transmit the HEW PPDU. The PHY circuitry 720 can include circuitry for modulation/demodulation, upconversion/downconversion, filtering, amplification, etc. As such, the computing device 710 can include a transceiver to transmit and receive data such as HEW PPDU. In certain embodiments, the hardware processing circuitry 740 can include one or more processors. The hardware processing circuitry 740 can be configured to perform functions based on instructions being stored in a memory device (e.g., RAM or ROM) or based on special purpose circuitry. In certain embodiments, the hardware processing circuitry 740 can be configured to perform one or more of the functions described herein, such as disabling the generation and/or sending of a presence pulse or a long beacon extension request when the computing device 710 does not need or desire to receive wireless charging.

In certain embodiments, one or more antennas may be coupled to or included in the PHY circuitry 720. The antenna(s) can transmit and receive wireless signals, including the transmission of HEW packets. As described herein, the one or more antennas can include one or more directional or omnidirectional antennas, including dipole antennas, monopole antennas, patch antennas, loop antennas, microstrip antennas or other types of antennas suitable for transmission of RF signals. In scenarios in which MIMO communication is utilized, the antennas may be physically separated to leverage spatial diversity and the different channel characteristics that may result.

The memory 750 can retain or otherwise store information for configuring the other circuitry to perform operations for configuring and transmitting HEW packets and performing the various operations described herein including the allocation of and use of bandwidth (AP) and using the allocation of the bandwidth (STA).

The computing device 710 can be configured to communicate using OFDM communication signals over a multicarrier communication channel. More specifically, in certain embodiments, the computing device 710 can be configured to communicate in accordance with one or more specific radio technology protocols, such as the IEEE family of standards including IEEE 802.11-2012, IEEE 802.11n-2009, IEEE 802.11ac-2013, IEEE 802.11ax, DensiFi, and/or proposed specifications for WLANs. In one of such embodiments, the computing device 710 can utilize or otherwise rely on symbols having a duration that is four times the symbol duration of IEEE 802.11n and/or IEEE 802.11ac. It should be appreciated that the disclosure is not limited in this respect and, in certain embodiments, the computing device 710 also can transmit and/or receive wireless communications in accordance with other protocols and/or standards.

The computing device 710 can be embodied in or can constitute a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), an access point, a base station, a transmit/receive device for a wireless standard such as IEEE 802.11 or IEEE 802.16, or other types of communication devices that may receive and/or transmit information wirelessly. Similarly to the wireless device 510, the computing device 710 can include, for example, one or more of a keyboard, a display, a non-volatile memory port, multiple antennas, a graphics processor, an application processor, speakers, and other mobile device elements. The display may be an LCD screen including a touch screen.

It should be appreciated that while the computing device 710 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In certain embodiments, the functional elements may refer to one or more processes operating or otherwise executing on one or more processors.

In example embodiments of the disclosure, there may be a non-transitory computer-readable medium. The non-transitory computer-readable medium may store computer-executable instructions which, when executed by a processor, cause the processor to perform operations comprising: facilitating receipt of wireless power by a wireless device from a wireless charging device; determining wireless power is no longer required by the wireless device; and preventing the generation of at least one of a presence pulse or a long beacon extension request pulse by the wireless device in response to the wireless charging device.

Implementation may include one or more of the following features. The non-transitory computer-readable medium wherein the computer-executable instructions cause the processor to further perform operations may include operations to prevent generation of at least one of the presence pulse or the long beacon extension request pulse by switching a state of a pin in a circuit of the wireless device that is associated with the presence pulse or long beacon extension request pulse. The operations may include determining wireless power is no longer required by determining at least one of the battery of the wireless device is fully charged or the wireless device is connected to a wired power source. The non-transitory computer-readable medium may perform operations to facilitate receipt of wireless power comprising: determining receipt of a beacon; transmitting a presence pulse to the wireless charging device; determining a receipt of a magnetic field at a resonator of the wireless device; and charging a battery of the wireless device using the received magnetic field. Preventing generation of at least one presence pulse may comprise disabling the generation of the presence pulse or long beacon extension request pulse. The non-transitory computer-readable medium may possess presence pulses which include at least two current signals having power difference of at least 0.5 watts.

In example embodiments of the disclosure, there may be a device. The device may include a least one memory that stores computer-executable instructions; and at least one processor configured to access the at least one memory, wherein the least one processor is configured to execute the computer-executable instructions to: facilitate receipt of wireless power by a wireless device from a wireless charging device; determine wireless power is no longer required by the wireless device; prevent the generation of at least one of a presence pulse or a long beacon extension request pulse by the wireless device in response to the wireless charging device; determine wireless power is no longer required by the wireless device; and prevent the sending of at least one of a presence pulse or a long beacon extension request pulse by the wireless device.

Implementation may include one or more of the following features. The device may determine wireless power is no longer required by the wireless device having at least the battery at full charge or by the wireless device having a connection to a wired power source. The device may facilitate receipt of wireless power comprising: determining receipt of a beacon; transmitting a presence pulse to the wireless charging device; determining a receipt of a magnetic field at a resonator of the wireless device; and charging a battery of the wireless device using the received magnetic field. Preventing generation of at least one presence pulse may comprise the device disabling the generation of the presence pulse or long beacon extension request pulse. The device may possess presence pulses which include at least two current signals having power difference of at least 0.5 watts.

In example embodiments of the disclosure, there may be a method. The method may include operations comprising: receiving, by a wireless device, wireless power from a wireless charging device; determining, by the wireless device, that the wireless power is no longer desired by the wireless device; and disabling, by the wireless device, at least a portion of a circuit of the wireless device to prevent the sending a presence pulse or a long beacon extension request pulse by the wireless device in response to a beacon received from the wireless charging device.

Implementation may include one or more of the following features. The method may further include switching a state of a pin in an circuit of the wireless device, the circuit is associated with the generation of the presence pulse or a long beacon extension request pulse. When determining wireless power is no longer required comprises, the method may include determining at least one of a battery of the wireless device is fully charged or the wireless device is connected to a wired power source. Alternatively, the method may include sending a charge complete signal to the wireless charging device.

The method may include determining the wireless device needs charging, and enabling, by the wireless device, at least the portion of the circuit of the wireless device to enable the sending a presence pulse or a long beacon extension request pulse by the wireless device in response to a beacon received from the wireless charging device. The method may have presence pulses which include at least two current signals having power difference of at least 0.5 watts.

In example embodiments of the disclosure, there may be an apparatus. The apparatus may comprise: a means for receiving, by a wireless device, wireless power from a wireless charging device, a means for determining, by the wireless device, that the wireless power is no longer desired by the wireless device, and a means for disabling, by the wireless device, at least a portion of a circuit of the wireless device to prevent the sending a presence pulse or a long beacon extension request pulse by the wireless device in response to a beacon received from the wireless device.

Implementation may include one or more of the following features. The apparatus having means for disabling at least a portion of a circuit of the wireless device may comprise a means for switching a state of a pin in a circuit of the wireless device wherein the circuit is associated with the generation of the presence pulse or a long beacon extension request pulse. The apparatus having means for determining wireless power is no longer required may comprise a means for determining at least one of a battery of the wireless device is fully charged or that the wireless device is connected to a wired power source. Alternatively, the apparatus may include means for sending a charge complete signal to the wireless charging device.

The apparatus may include means for determining that the wireless device needs charging, and means for enabling, by the wireless device, at least the portion of the circuit of the wireless device to enable sending a presence pulse or a long beacon extension request pulse by the wireless device in response to a beacon received from the wireless charging device. The apparatus may have presence pulses that include at least two current signals having a power difference of at least 0.5 watts.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, can be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that can direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special-purpose hardware and computer instructions.

## Claims

1. A wireless device, comprising:
a battery;
at least one memory that stores computer-executable instructions; and
at least one processor configured to access the at least one memory, wherein the at least one processor is configured to execute the computer-executable instructions to:
facilitate receipt of wireless power by the wireless device from a wireless charging device, where the instructions to facilitate receipt of wireless power comprise: determine receipt of a beacon; cause to transmit a presence pulse or a long beacon extension request pulse to the wireless charging device by generating a detectable load change; determine a receipt of a magnetic field at a resonator of the wireless device; and cause charging of the battery of the wireless device using the received magnetic field;
determine wireless power is no longer required by the wireless device when the wireless device is connected to a wired power source; and
responsive to said determining wireless power is no longer required by the wireless device disable device discovery by preventing the sending of at least one of a presence pulse or a long beacon extension request pulse by the wireless device,
wherein the wireless device is configured to generate said presence pulses or long beacon extension request pulses by switching a load of the wireless device that draws power from the wireless charging device between a predetermined power range during an "on" period of the respective pulse process.

2. The wireless device of claim 1, wherein the instructions to prevent sending of at least one of a presence pulse or a long beacon extension request pulse comprises instructions to:
switch a state of a pin in a circuit of the wireless device, the circuit being associated with the generation of the presence pulse or a long beacon extension request pulse, or disable and/or not enable, by way of a hardware switch, circuitry in which the wireless device generates said at least one of the presence pulse or long beacon extension request pulse.

3. The wireless device of any of claims 1-2, wherein the instructions to prevent the sending at least one of the presence pulse or the long beacon extension request pulse comprises:
disable the generation of the presence pulse or a long beacon extension request pulse.

4. The wireless device of any of claims 1-3, wherein the presence pules includes at least two current signals having power difference of at least 0.5 watts.

5. A method comprising:
receiving, by a wireless device, wireless power from a wireless charging device by: determining receipt of a beacon; causing to transmit a presence pulse or a long beacon extension request pulse to the wireless charging device by generating a detectable load change; determining a receipt of a magnetic field at a resonator of the wireless device; and causing charging of a battery of the wireless device using the received magnetic field;
determining, by the wireless device, that the wireless power is no longer desired by the wireless device when the wireless device is connected to a wired power source; and
responsive to said determining that the wireless power is no longer desired by the wireless device disabling, by the wireless device, device discovery by disabling at least a portion of a circuit of the wireless device to prevent the sending a presence pulse or a long beacon extension request pulse by the wireless device in response to a beacon received from the wireless charging device,
wherein the wireless device is configured to generate said presence pulses or long beacon extension request pulses by switching a load of the wireless device that draws power from the wireless charging device between a predetermined power range during an "on" period of the respective pulse process.

6. The method of claim 5, wherein disabling at least a portion of a circuit of the wireless device comprises:
switching a state of a pin in a circuit of the wireless device, the circuit is associated with the generation of the presence pulse or a long beacon extension request pulse, or disabling and/or not enabling, by way of a hardware switch, circuitry in which the wireless device generates said at least one of the presence pulse or long beacon extension request pulse.

7. The method of any of claims 5-6, further comprising:
determining the wireless device needs charging; and
enabling, by the wireless device, at least the portion of the circuit of the wireless device to enable the sending a presence pulse or a long beacon extension request pulse by the wireless device in response to a beacon received from the wireless charging device.

8. The method of any of claims 5-7, wherein the presence pules includes at least two current signals having power difference of at least 0.5 watts.

## Patentansprüche

1. Drahtlosvorrichtung, umfassend:
eine Batterie;
mindestens einen Speicher, in dem in einem Computer ausführbare Anweisungen gespeichert sind; und
mindestens einen Prozessor, der konfiguriert ist zum Zugreifen auf den mindestens einen Speicher, wobei der mindestens eine Prozessor konfiguriert ist, um die in einem Computer ausführbaren Anweisungen auszuführen zum: Vereinfachen eines Empfangs, in der Drahtlosvorrichtung, einer drahtlosen Leistungsübertragung von einer drahtlosen Ladevorrichtung, wobei die Anweisungen zum Vereinfachen eines Empfangs einer drahtlosen Leistungsübertragung umfassen: Ermitteln eines Empfangs eines Beacons; Veranlassen eines Übertragens eines Präsenzimpulses oder eines Impulses einer Erweiterungsanforderung für lange Beacons zu der drahtlosen Ladevorrichtung, indem ein messbarer Lastwechsel erzeugt wird; Ermitteln eines Empfangs eines magnetischen Feldes in einem Resonator der Drahtlosvorrichtung; und Veranlassen eines Aufladens der Batterie der Drahtlosvorrichtung unter Verwendung des empfangenen magnetischen Feldes;
Ermitteln, dass die drahtlose Leistungsübertragung nicht länger für die Drahtlosvorrichtung erforderlich ist, wenn die Drahtlosvorrichtung mit einer drahtgebundenen Stromquelle verbunden ist; und
als Reaktion auf das Ermitteln, dass die drahtlose Leistungsübertragung nicht länger für die Drahtlosvorrichtung erforderlich ist, Deaktivieren einer Vorrichtungserkennung, indem das Senden mindestens eines Präsenzimpulses oder eines Impulses einer Erweiterungsanforderung für lange Beacons durch die Drahtlosvorrichtung verhindert wird,
wobei die Drahtlosvorrichtung konfiguriert ist zum Erzeugen des Präsenzimpulses oder des Impulses einer Erweiterungsanforderung für lange Beacons, indem eine Last der Drahtlosvorrichtung umgeschaltet wird, die eine Leistung von der drahtlosen Ladevorrichtung in einem vorbestimmten Leistungsbereich während eines "Ein"-Zeitraums des jeweiligen Impulsprozesses abzieht.

2. Drahtlosvorrichtung nach Anspruch 1, wobei die Anweisungen zum Verhindern des Sendens von mindestens einem eines Präsenzimpulses oder eines Impulses einer Erweiterungsanforderung für lange Beacons Anweisungen umfasst zum:
Umschalten eines Zustands eines Stifts in einer Schaltung der Drahtlosvorrichtung, wobei die Schaltung mit der Erzeugung des Präsenzimpulses oder eines Impulses einer Erweiterungsanforderung für lange Beacons assoziiert ist, oder Deaktivieren und/oder Nicht-Aktivieren, mithilfe eines Hardwareschalters, einer Schaltungsanordnung, in der die Drahtlosvorrichtung den mindestens einen des Präsenzimpulses oder des Impulses einer Erweiterungsanforderung für lange Beacons erzeugt.

3. Drahtlosvorrichtung nach einem der Ansprüche 1 bis 2, wobei die Anweisungen zum Verhindern des Sendens von mindestens einem des Präsenzimpulses oder des Impulses einer Erweiterungsanforderung für lange Beacons umfassen:
Deaktivieren der Erzeugung des Präsenzimpulses oder des Impulses einer Erweiterungsanforderung für lange Beacons.

4. Drahtlosvorrichtung nach einem der Ansprüche 1 bis 3, wobei der Präsenzimpuls mindestens zwei Stromsignale beinhaltet, die eine Leistungsdifferenz von mindestens 0,5 Watt aufweisen.

5. Verfahren, umfassend:
Empfangen, in einer Drahtlosvorrichtung, einer drahtlosen Leistungsübertragung von einer drahtlosen Ladevorrichtung, durch: Ermitteln eines Empfangs eines Beacons; Veranlassen eines Übertragens eines Präsenzimpulses oder eines Impulses einer Erweiterungsanforderung für lange Beacons zu der drahtlosen Ladevorrichtung, indem ein messbarer Lastwechsel erzeugt wird; Ermitteln eines Empfangs eines magnetischen Feldes in einem Resonator der Drahtlosvorrichtung; und Veranlassen eines Aufladens einer Batterie der Drahtlosvorrichtung unter Verwendung des empfangenen magnetischen Feldes;
Ermitteln, durch die Drahtlosvorrichtung, dass die drahtlose Leistungsübertragung nicht länger durch die Drahtlosvorrichtung erwünscht ist, wenn die Drahtlosvorrichtung mit einer drahtgebundenen Stromquelle verbunden ist; und
als Reaktion auf das Ermitteln, dass die drahtlose Leistungsübertragung nicht länger durch die Drahtlosvorrichtung erwünscht ist, Deaktivieren, durch die Drahtlosvorrichtung, einer Vorrichtungserkennung, indem mindestens ein Teil einer Schaltung der Drahtlosvorrichtung deaktiviert wird, um das Senden eines Präsenzimpulses oder eines Impulses einer Erweiterungsanforderung für lange Beacons durch die Drahtlosvorrichtung als Reaktion auf ein Beacon zu verhindern, das von der drahtlosen Ladevorrichtung empfangen wird,
wobei die Drahtlosvorrichtung konfiguriert ist zum Erzeugen des Präsenzimpulses oder des Impulses einer Erweiterungsanforderung für lange Beacons, indem eine Last der Drahtlosvorrichtung umgeschaltet wird, die eine Leistung von der drahtlosen Ladevorrichtung in einem vorbestimmten Leistungsbereich während eines "Ein"-Zeitraums des jeweiligen Impulsprozesses abzieht.

6. Verfahren nach Anspruch 5, wobei das Deaktivieren mindestens eines Teils einer Schaltung der Drahtlosvorrichtung umfasst:
Umschalten eines Zustands eines Stifts in einer Schaltung der Drahtlosvorrichtung, wobei die Schaltung mit der Erzeugung des Präsenzimpulses oder eines Impulses einer Erweiterungsanforderung für lange Beacons assoziiert ist, oder Deaktivieren und/oder Nicht-Aktivieren, mithilfe eines Hardwareschalters, einer Schaltungsanordnung, in der die Drahtlosvorrichtung den mindestens einen des Präsenzimpulses oder des Impulses einer Erweiterungsanforderung für lange Beacons erzeugt.

7. Verfahren nach einem der Ansprüche 5 bis 6, das ferner umfasst:
Ermitteln, dass die Drahtlosvorrichtung ein Aufladen benötigt; und
Aktivieren, durch die Drahtlosvorrichtung, mindestens des Teils der Schaltung der Drahtlosvorrichtung zum Aktivieren des Sendens eines Präsenzimpulses oder eines Impulses einer Erweiterungsanforderung für lange Beacons durch die Drahtlosvorrichtung als Reaktion auf ein Beacon, das von der drahtlosen Ladevorrichtung empfangen wird.

8. Verfahren nach einem der Ansprüche 5 bis 7, wobei der Präsenzimpuls mindestens zwei Stromsignale beinhaltet, die eine Leistungsdifferenz von mindestens 0,5 Watt aufweisen.

## Revendications

1. Dispositif sans fil comprenant :
une batterie ;
au moins une mémoire qui stocke des instructions exécutables par ordinateur ; et
au moins un processeur configuré pour accéder à l'au moins une mémoire, où l'au moins un processeur est configuré pour exécuter les instructions exécutables par ordinateur pour :
faciliter la réception de l'énergie sans fil par le dispositif sans fil à partir d'un dispositif de charge sans fil, où les instructions pour faciliter la réception de l'énergie sans fil comprennent : de déterminer la réception d'une balise ; de provoquer la transmission d'une impulsion de présence ou d'une impulsion de demande d'extension de balise longue au dispositif de charge sans fil en générant un changement de charge détectable ; de déterminer la réception d'un champ magnétique au niveau d'un résonateur du dispositif sans fil ; et de provoquer la charge de la batterie du dispositif sans fil à l'aide du champ magnétique reçu ;
déterminer que l'alimentation sans fil n'est plus requise par le dispositif sans fil lorsque le dispositif sans fil est connecté à une source d'alimentation câblée ; et
en réponse à ladite détermination que l'alimentation sans fil n'est plus requise par le dispositif sans fil, désactiver la découverte du dispositif en empêchant l'envoi d'au moins une impulsion parmi une impulsion de présence ou une impulsion de demande d'extension de balise longue par le dispositif sans fil,
où le dispositif sans fil est configuré pour générer lesdites impulsions de présence ou impulsions de demande d'extension de balise longue en commutant une charge du dispositif sans fil qui tire de l'énergie du dispositif de charge sans fil entre une plage de puissance prédéterminée pendant une période « ON » du processus d'impulsion respectif.

2. Dispositif sans fil selon la revendication 1, dans lequel les instructions pour empêcher l'envoi d'au moins une impulsion parmi une impulsion de présence ou une impulsion de demande d'extension de balise longue comprennent des instructions pour :
commuter un état d'une broche dans un circuit du dispositif sans fil, le circuit étant associé à la génération de l'impulsion de présence ou d'une impulsion de demande d'extension de balise longue, ou désactiver et/ou ne pas activer, au moyen d'un commutateur matériel, les circuits dans lesquels le dispositif sans fil génère ladite au moins une impulsion parmi l'impulsion de présence ou l'impulsion de demande d'extension de balise longue.

3. Dispositif sans fil selon l'une quelconque des revendications 1 et 2, dans lequel les instructions visant à empêcher l'envoi d'au moins une impulsion parmi une impulsion de présence ou une impulsion de demande d'extension de balise longue comprennent :
de désactiver la génération de l'impulsion de présence ou d'une impulsion de demande d'extension de balise longue.

4. Dispositif sans fil selon l'une quelconque des revendications 1 à 3, dans lequel les impulsions de présence comprennent au moins deux signaux de courant ayant une différence de puissance d'au moins 0,5 watt.

5. Procédé comprenant les étapes suivantes :
recevoir, par un dispositif sans fil, de l'énergie sans fil depuis un dispositif de charge sans fil : en déterminant la réception d'une balise ; en provoquant la transmission d'une impulsion de présence ou d'une impulsion de demande d'extension de balise longue au dispositif de charge sans fil en générant un changement de charge détectable ; en déterminant la réception d'un champ magnétique au niveau d'un résonateur du dispositif sans fil ; et en provoquant la charge d'une batterie du dispositif sans fil à l'aide du champ magnétique reçu ;
déterminer, par le dispositif sans fil, que l'alimentation sans fil n'est plus souhaitée par le dispositif sans fil lorsque le dispositif sans fil est connecté à une source d'alimentation câblée ; et
en réponse à ladite détermination que l'alimentation sans fil n'est plus souhaitée par le dispositif sans fil, désactiver, par le dispositif sans fil, la découverte du dispositif en désactivant au moins une partie d'un circuit du dispositif sans fil pour empêcher l'envoi d'une impulsion de présence ou d'une impulsion de demande d'extension de balise longue par le dispositif sans fil en réponse à une balise reçue du dispositif de charge sans fil,
où le dispositif sans fil est configuré pour générer lesdites impulsions de présence ou impulsions de demande d'extension de balise longue en commutant une charge du dispositif sans fil qui tire de l'énergie du dispositif de charge sans fil entre une plage de puissance prédéterminée pendant une période « ON » du processus d'impulsion respectif.

6. Procédé selon la revendication 5, dans lequel la désactivation d'au moins une partie d'un circuit du dispositif sans fil comprend :
de commuter un état d'une broche dans un circuit du dispositif sans fil, le circuit étant associé à la génération de l'impulsion de présence ou d'une impulsion de demande d'extension de balise longue, ou désactiver et/ou ne pas activer, au moyen d'un commutateur matériel, les circuits dans lesquels le dispositif sans fil génère ladite au moins une impulsion parmi l'impulsion de présence ou l'impulsion de demande d'extension de balise longue.

7. Procédé selon l'une quelconque des revendications 5 à 6, comprenant en outre les étapes suivantes :
déterminer que le dispositif sans fil a besoin d'être rechargé ; et
activer, par le dispositif sans fil, l'au moins une partie du circuit du dispositif sans fil pour permettre l'envoi d'une impulsion de présence ou d'une impulsion de demande d'extension de balise longue par le dispositif sans fil en réponse à une balise reçue du dispositif de charge sans fil.

8. Procédé selon l'une quelconque des revendications 5 à 7, dans lequel les impulsions de présence comprennent au moins deux signaux de courant ayant une différence de puissance d'au moins 0,5 watt.
